# EUROPÄISCHE PATENTSCHRIFT

(11) **EP 2 040 960 B1**
(45) Veröffentlichungstag und Bekanntmachung des Hinweises auf die Patenterteilung: **23.06.2010**
(21) Anmeldenummer: 07765755.9
(22) Anmeldetag: 02.07.2007
(51) Int. Cl.: B60S 1/38, B60S 1/40

(54) **ANSCHLUSSELEMENT FÜR EIN WISCHBLATT SOWIE WISCHBLATT**
CONNECTION ELEMENT FOR A WIPER BLADE AND WIPER BLADE
ÉLÉMENT DE RACCORDEMENT POUR UN BALAI D'ESSUIE-GLACE ET ESSUIE-GLACE

(30) Priorität: 07.07.2006 DE 102006031514
(43) Veröffentlichungstag der Anmeldung: 01.04.2009
(73) Patentinhaber: Robert Bosch GmbH, 70442 Stuttgart (DE)
(72) Erfinder: HERINCKX, Dirk, 3350 Drieslinter (BE); VAN BAELEN, David, 3020 Winksele (BE); BUBBA, Marcello, 3001 Heverlee (BE)
(86) Internationale Anmeldenummer: PCT/EP2007/056637
(87) Internationale Veröffentlichungsnummer: WO 2008/003675

(56) Entgegenhaltungen:
- DE-A1- 19 833 666
- FR-A1- 2 868 376

## Beschreibung

### Stand der Technik

Die Erfindung geht von einem Wischblatt und einem Anschlusselement für ein Wischblatt nach der Gattung der unabhängigen Ansprüche aus.

Aus der DE 198 33 666 A1 ist ein Wischblatt für Scheiben von Kraftfahrzeugen bekannt, das im mittleren Bereich ein Anschlusselement zum gelenkigen Verbinden mit einem Wischarm aufweist. Das Anschlusselement umfasst ein Grundelement, das aus zwei Seitenteilen zusammengesetzt ist, die einander zugewandte offene Längsnuten aufweisen. Mit diesen sitzen sie auf Federschienen, die in seitlichen Längsnuten einer Wischleiste teilweise eingebettet sind und zumindest im Bereich des Anschlusselements ein Stück weit seitlich aus den Längsnuten vorstehen. Die Höhe der Längsnuten im Anschlusselement ist größer als die Stärke der Federschienen, sodass durch das Anschlusselement die Krümmung der Federschienen nicht behindert wird. Am oberen Schenkel der Längsnuten der Seitenteile befinden sich fingerartige Vorsprünge, wobei die Vorsprünge des einen Seitenteils zu den Vorsprüngen des anderen Seitenteils in Längsrichtung so versetzt sind, dass sie in die durch die Zwischenräume gebildeten Aussparungen des jeweils anderen Seitenteils eingreifen können. An den Stirnseiten der Vorsprünge sind abgeschrägte Anlageflächen vorgesehen, die mit entsprechend abgeschrägten Anlageflächen des jeweils anderen Seitenteils zusammenwirken und die Seitenteile in Richtung einer Hochachse gegeneinander verriegeln. Die Vorsprünge besitzen in ihrem mittleren Bereich Längsnuten, die in montiertem Zustand einen einer Wischleiste des Wischblatts zugewandten Längskanal zur Aufnahme einer Rückenleiste der Wischleiste bilden. Als Gelenkelemente sind an den äußeren Längsseiten der Seitenteile Lagerzapfen angeordnet. Diese besitzen an ihrem Umfang Abflachungen, sodass eine an ihrem Umfang teilweise offene Nabe eines Verbindungselements des Wischarms über die Lagerzapfen geschoben und durch eine Schwenkbewegung verriegelt werden kann.

### Offenbarung der Erfindung

Nach der Erfindung, die durch die Merkmale des unabhängigen Anspruchs 1 definiert ist, überdeckt eine Blechkralle mit ihrem Boden die Seitenteile und hält und führt diese von außen quer zur Längsrichtung durch Seitenführungen. Die Seitenführungen sind an den Längsseiten des Bodens zu einem unteren Schenkel des jeweiligen Seitenteils abgewinkelt. Dabei untergreifen Laschen, die in Längsrichtung an den Seitenführungen angeformt sind, die Nocken an der dem Boden abgewandten Seite zumindest teilweise, indem sie bei der Montage unter die Nocken gebogen werden. Damit beim Biegevorgang die Seitenführungen nicht beeinträchtigt werden, sind an den Übergängen zwischen den Seitenführungen und den Laschen Biegehilfen vorgesehen.

Um die Blechkralle zu den Seitenteilen in Längsrichtung zu fixieren, können die Seitenführungen in Längsrichtung an den Nocken anliegen. Eine andere Möglichkeit, die Blechkralle zu fixieren, besteht darin, dass die Seitenteile an ihrer Oberseite Zentriernocken aufweisen, die in Aussparungen in der Blechkralle passen. Zweckmäßigerweise ist die Materialstärke der Laschen und der Seitenführungen auf die Höhe des Nockens so abgestimmt, dass ihre Außenkonturen bündig abschließen und ein strömungsgünstiges Design ergeben.

Durch die Blechkralle werden die Seitenteile fest miteinander verbunden, sodass sie sich nicht selbstständig von den Federschienen lösen können. Dabei ist die Höhe der Seitenteile gering, da die Blechkralle die Seitenteile mit den Seitenführungen und den Laschen nur an den Längsseiten umfasst und nicht auf der der Fahrzeugscheibe zugewandten Seite. Dadurch ergibt sich ein ausreichender Abstand zwischen den Seitenteilen und der Fahrzeugscheibe, sodass gewährleistet ist, dass die Seitenteile in keiner Situation in Kontakt mit der Fahrzeugscheibe gelangen.

Relativ zu den Federschienen ist das Anschlusselement in Längsrichtung durch Nocken gesichert, die an der Innenseite der Führungsnuten der Seitenteile angeformt sind und in Aussparungen der Federschienen eingreifen.

Die Vorsprünge und Aussparungen sind in den Endbereichen der Seitenteile vorgesehen, wobei die Anlageflächen in Längsrichtung zu beiden Seiten der Vorsprünge und Aussparungen angeordnet sind. Die Anlageflächen können gestuft oder schräg zu den oberen Schenkeln der Längsnuten verlaufen. Sie weisen zweckmäßigerweise in Längsrichtung gesehen abwechselnd zu den Längsnuten der Seitenteile oder in die entgegengesetzte Richtung. In montiertem Zustand stützen sich somit die Anlageflächen der Seitenteile gegenseitig ab, ohne dass Kräfte, die die Seitenteile zusammenhalten, auf das Wischblatt mit den Federschienen übertragen werden. Nach einer Ausgestaltung der Erfindung sind jeweils zwei Anlageflächen auf einer Seite eines Vorsprungs bzw. einer Aussparungen angeordnet und bilden jeweils eine konvexe bzw. konkave Dachfläche, die geneigt zur Hochachse verlaufen. Bei der Montage greift die konvexe Dachfläche in die konkave Dachfläche ein. Somit sind die Seitenteile in Richtung der Hochachse verriegelt. Um die Montage zu erleichtern, ist auf der den Anlageflächen gegenüberliegenden Seite der Aussparung ein Rasthaken angeordnet, der mit einer Rastvertiefung an einem Vorsprung zusammenwirkt. Dadurch werden die Seitenteile und die Federschiene bereits zusammengehalten, bevor die Blechkralle montiert wird.

Zweckmäßigerweise bilden der Vorsprung des einen Seitenteils mit seinen angrenzenden Anlageflächen und die zugeordnete Aussparung des anderen Seitenteils mit ihren angrenzenden, entsprechenden Anlageflächen mindestens einen Führungsblock, der gegenüber den oberen Schenkeln nach oben vorsteht und in eine entsprechende Aussparung der Blechkralle eingreift. Die Umrandung der Aussparung der Blechkralle hält den Führungsblock nach der Montage der Blechkralle eng umschlossen und sichert so in hohem Maße die Stabilität des Anschlusselements. Dabei ist es vorteilhaft, dass die Nocken, die zur Verriegelung der Laschen an den Seitenführungen der Blechkrallen dienen, über die oberen Schenkel der Längsnuten der Seitenteile hervorragen und mit den Führungsblöcken Zwischenräume bilden, in denen Teile der Umrandung der Aussparungen eingebettet sind. Die Nocken und die Führungsblöcke schließen zweckmäßigerweise mit der Oberseite der Umrandung der Aussparung bündig ab.

Um den Freigang einer Rückenleiste der Wischleiste im Bereich des Anschlusselements zu gewährleisten, bilden die Vorsprünge an ihren einander zugewandten Enden einen mittleren Längskanal, der auf der vom Boden der Blechkralle abgewandten Seite liegt. Dabei ist es zweckmäßig, das in der Mitte des oberen Schenkels der Längsnuten eine zum anderen Seitenteil weisende Lasche angeformt ist, die im montierten Zustand mit einem schneidenförmigen Nocken an ihrer Unterseite gegen die Rückenleiste der Wischleiste drückt und somit die Seitenteile auf der Wischleiste in Längsrichtung fixiert, ohne die Biegsamkeit der Wischleiste im Bereich des Anschlusselements zu beeinträchtigen.

Die Höhe der Längsnuten in den Seitenteilen wird relativ zur Materialstärke der Federschienen so gewählt, dass sie die Krümmung der Federschienen nicht beeinträchtigen. Dabei hat die gebogene Federschiene im montierten Zustand einen Linienkontakt an der Innenseite des oberen Schenkels der Längsnut. Damit die Federschiene sich vom gestreckten Zustand bis zu einem vorgegebenen kleinsten Radius bewegen kann, um der Krümmung der Fahrzeugscheibe optimal folgen zu können, ohne dass der Kontakt zwischen den Seitenteilen und den Federschienen verloren geht, ist in der Mitte der Längsnut an der Innenseite ihres unteren Schenkels ein Abstandhalter quer zur Längsrichtung angeordnet. Dieser hat die Form eines Schneiden- oder Walzenlagers und behindert somit nicht die Biegung der Federschienen.

In vorteilhafter Weise können die Seitenteile für ein Wischblatt identisch gestaltet sein, sodass sich eine geringe Teilevielfalt ergibt.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsdarstellung eines Grundelements eines Anschlusselements mit einer Wischleiste,
- Fig. 2: eine Explosionsdarstellung eines Anschlusselements,
- Fig. 3: eine perspektivische Ansicht eines an einer Wischleiste montierten Anschlusselements,
- Fig. 4: eine Ansicht in Längsrichtung eines Wischblatts.
- Fig. 5: eine Variante zu Fig. 2 und
- Fig. 6: eine perspektivische Darstellung eines Seitenteils nach Fig. 5

### Ausführungsformen der Erfindung

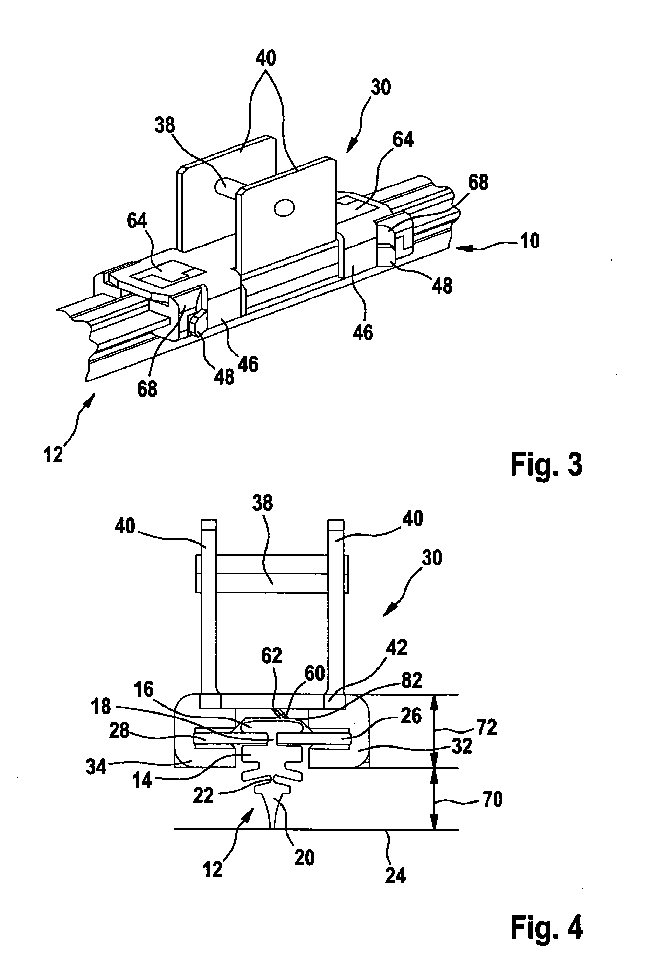

Ein Wischblatt 10 besitzt eine Wischleiste 12, deren Wischlippe 20 über einen Kippsteg 22 mit einer Kopfleiste 14 verbunden ist (Fig. 4). Im Wischbetrieb gleitet die Wischlippe 20 an einer Fahrzeugscheibe 24 entlang. In die Kopfleiste 14 sind zwei Federschienen 26, 28 in Längsnuten seitlich eingesetzt, die als Tragelement dienen. Der über die Federschienen 26, 28 nach oben vorstehende Teil der Kopfleiste 14 wird als Rückenleiste 16 bezeichnet und ist über einen Steg 18 mit dem übrigen Teil der Kopfleiste 14 verbunden. Die Federschienen 26, 28 stehen ein Stück weit aus den Längsnuten der Kopfleiste 14 vor. Auf den vorstehenden Teilen ist im mittleren Bereich ein Anschlusselement 30 angebracht. Dieses hat ein Grundelement, dass aus zwei Seitenteilen 32, 34 zusammengesetzt ist und durch eine Blechkralle 36 zusammengehalten wird. Die Seitenteile 32, 34 besitzen einander zugewandte, offene Längsnuten 50, in denen im montierten Zustand die aus der Kopfleiste 14 vorstehenden Teile der Federschienen 26, 28 verlaufen. In den Längsnuten 50 sind Nocken 76 vorgesehen, die in Aussparungen 78 der Federschienen 26, 28 eingreifen und das Anschlusselement 30 in Längsrichtung 74 relativ zu den Federschienen 26, 28 fixieren.

Die Längsnuten 50 werden nach unten durch einen unteren Schenkel 54 und nach oben durch einen oberen Schenkel 52 begrenzt. An den oberen Schenkel 52 ist in einem Endbereich ein Vorsprung 56 und im anderen Ende eine Aussparung 58 angeordnet, die jeweils zum gegenüberliegenden Seitenteil 32, 34 gerichtet sind. Der Vorsprung 56 des Seitenteils 32 passt in die Aussparung 58 des Seitenteils 34, während der Vorsprung 56 des Seitenteils 34 in die Aussparung 58 des Seitenteils 32 passt. Im montierten Zustand fixieren die Vorsprünge 56 in den Aussparungen 58 die Seitenteile 32, 34 in Längsrichtung zueinander und definieren den Abstand der Längsnuten 50 quer zum Wischblatt 10.

Seitlich der Vorsprünge 56 und der Aussparungen 58 sind an dem Seitenteil 32 Anlageflächen vorgesehen, die mit Anlageflächen 62 an dem Seitenteil 34 zusammenwirken. Die Anlageflächen 60, 62 verlaufen geneigt zum oberen Schenkel 52 der Längsnut 50 und sind in Längsrichtung 74 abwechselnd der Längsnut 50 zugewandt oder abgewandt. In montiertem Zustand fixieren die Anlageflächen die Seitenteile 32, 34 in beiden Richtungen der Hochachse 80.

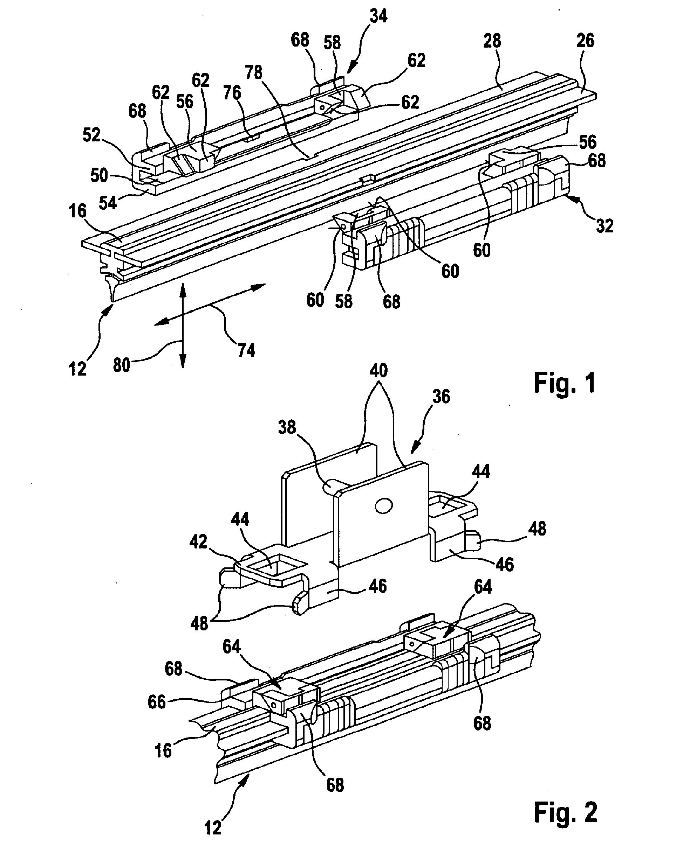

Der Vorsprung 56 des Seitenteils 32 mit seinen seitlichen Anlageflächen 60 bildet mit der Aussparung 58 des Seitenteils 34 und deren seitlichen Anlageflächen 62 im montierten Zustand einen Führungsblock 64 (Fig. 2), der gegenüber den oberen Schenkeln 52 der Seitenteile 32, 34 nach außen vorsteht.

Die beiden Seitenteile 32, 34 werden durch eine Blechkralle 36 zusammengehalten, die einen Boden 42 aufweist, der die Seitenteile überdeckt und mit Seitenführungen 46 zusammenhält. Diese sind in den Endbereichen zu den Seitenteilen 32, 34 hin abgewinkelt an den Boden 42 angeformt. Zwischen den Seitenführungen 46 jedes Seitenteils 32, 34 sind in entgegengesetzter Richtung zu den Seitenführungen 46 Seitenwangen 40 umgebogen. Zwischen diesen ist ein Gelenkelement 38 angeordnet, das ein Gelenkbolzen oder eine Gelenknabe sein kann. In Längsrichtung sind an den Seitenführungen 46 nach außen weisende Laschen 48 angeformt. Bei der Montage wird die Blechkralle 36 in Richtung der Hochachse 80 über die vormontierten Seitenteile 32, 34 geschoben, wobei die Seitenführungen 46 in Längsrichtung 74 an Nocken 68 der Seitenteile 32, 34 anliegen, während die Laschen 48 zum Schluss der Montage nach innen umgebogen werden, und die Nocken 68 zumindest teilweise an einer Seite untergreifen, die vom Boden 42 der Blechkralle 36 abgewandt ist.

Bei der Montage taucht der Führungsblock 64 in eine entsprechende Aussparung 44 im Boden 42 der Blechkralle 36. Die Umrandung der Aussparung 44 hält dabei den Führungsblock 64 eng umschlossen, sodass es eine stabile Verbindung zwischen den beiden Seitenteilen 32, 34 ergibt. Die Nocken 68 stehen ebenfalls ein Stück weit über die Außenfläche der oberen Schenkel 52 der Seitenteile 32, 34 vor, und zwar so weit, dass sie im montierten Zustand bündig mit der Oberseite des Bodens 42 und der Führungsblöcke 64 abschließen, wobei die Umrandung der Aussparung 44 in einen Zwischenraum 66 zwischen dem Nocken 68 und dem Führungsblock 64 eingebettet ist. Ebenfalls schließen die Nocken 68 bündig an die Laschen 48 und die Seitenführungen 46 an.

Die Vorsprünge 56 und die Aussparungen 58 zusammen mit ihren Anlageflächen 60, 62 bilden an ihren einander zugewandten Enden einen Längskanal 82 (Fig. 4), wobei die Trennfuge im Bereich des Längskanals 82 verläuft, sodass die beiden Seitenteile 32, 34 leicht über die Rückenleiste 16 geschoben werden können, und die Biegsamkeit der Wischleiste 12 nicht beeinträchtigt wird. In gleicher Weise ist die Höhe der Längsnuten 50 der Seitenteile 32, 34 größer als die Stärke der Federschienen 26, 28. Dadurch behindert das Anschlusselement 30 die Krümmung der Federschienen 26, 28 nicht.

Der Aufbau des erfindungsgemäßen Anschlusselements 30 ergibt eine geringe Höhe 72 der Seitenteile 32, 34 (Fig. 4), wodurch sich insbesondere ein relativ großer Abstand 70 zwischen den Seitenteilen 32, 34 einerseits und der Fahrzeugscheibe 24 andererseits ergibt, durch den eine Kollision zwischen den Seitenteilen 32, 34 und der Fahrzeugscheibe 24 verhindert wird.

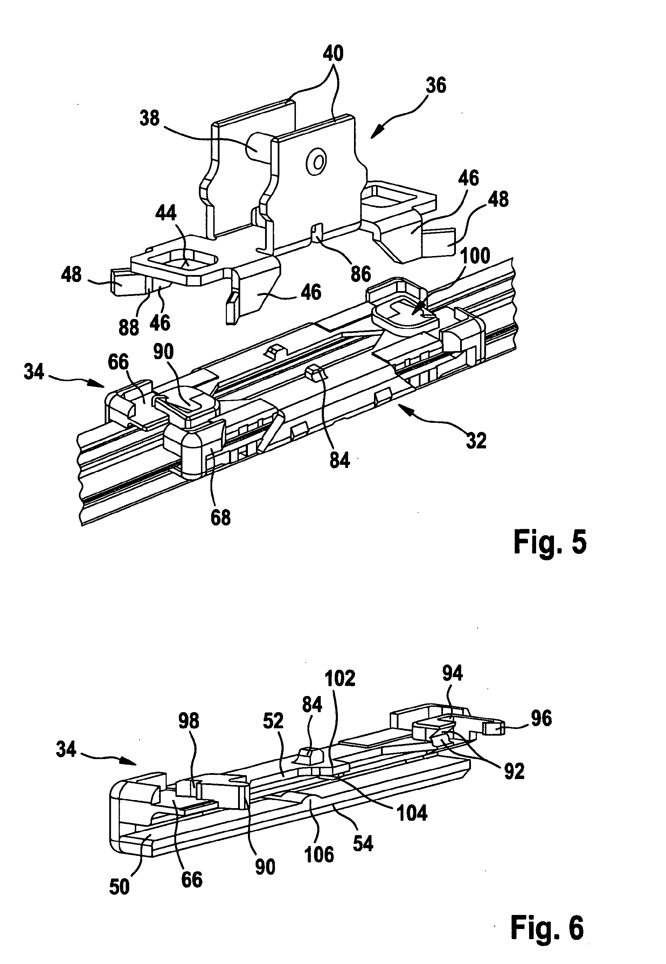

Bei der Ausführung nach Fig. 5 besitzt die Blechkralle 36 im mittleren Bereich ihres Bodens 42 und ihrer Seitenwangen 40 an jeder Längsseite eine Aussparung 86, in die Zentriernocken 84 an der Oberseite der Seitenteile 32 und 34 eingreifen und somit die Blechkralle 36 in Längsrichtung 74 sichern. Ferner sind am Übergang zwischen den Seitenführungen 46 und den Laschen 48 Biegehilfen 88 in Form von Einprägungen vorgesehen, sodass beim Biegevorgang der Laschen 48 die Seitenführungen 46 nicht beeinträchtigt werden.

Ferner besitzen die Seitenteile 32 und 34 in ihren Endbereichen Vorsprünge 90 und Aussparungen 94, die jeweils zu entsprechenden Aussparungen 94 bzw. Vorsprüngen 90 des anderen Seitenteils 32, 34 passen. Auf einer Seite eines jeden Vorsprungs 90 bzw. einer jeden Aussparung 94 befinden sich jeweils zwei zur Längsrichtung 74 geneigt verlaufende Anlageflächen 92, wobei die Anlageflächen 92 an dem Vorsprung 90 eine konvexe Dachfläche bilden, die in eine konkave Dachfläche passt, die von den Anlageflächen 92 an den Aussparungen 94 gebildet wird. Somit sind die Seitenteile in Richtung der Hochachse 80 verriegelt.

Um die Montage zu erleichtern, ist auf der den Anlageflächen 92 gegenüberliegenden Seite der Aussparung 94 ein Rasthaken 96 vorgesehen, der bei der Montage in eine Rastvertiefung 98 an dem Vorsprung 90 des jeweils anderen Seitenteils 32, 34 einrastet. Somit werden bereits vor der Montage der Blechkralle 36 die Seitenteile, 32, 34 und die Federschienen 26, 28 zusammengehalten. Bei dieser Ausführung bilden die Vorsprünge 90 und die zugeordnete Aussparung 94 mit den zugehörigen Anlageflächen 92 und Rasthaken 96 einen Führungsblock 100, der in eine Aussparung 44 des Bodens 42 der Blechkralle 36 eingreift.

Die Seitenteile 32, 34 besitzen bei der Ausführung nach Fig. 6 zusätzlich eine Lasche 102, die am oberen Schenkel 52 in Mitte der Längsnut 50 angeformt ist und an ihrer der Rückenleiste 16 zugewandten Seite einen Nocken 104 aufweist, der im montierten Zustand gegen die Rückenleiste 16 der Wischleiste 12 drückt und somit die Wischleiste gegenüber den Seitenteilen 32, 34 in Längsrichtung 74 sichert. Die Höhe der Längsnuten 50 ist so gewählt, dass die gebogenen Federschienen 26, 28 und damit die Wischleiste 12 ohne Zwang den Krümmungen der Fahrzeugscheibe 24 folgen können. Damit unter allen Betriebsbedingungen dennoch ein enger Kontakt zwischen den Federschienen 26, 28 und den Seitenteilen 32, 34 erhalten bleibt, ist an der Innenseite des unteren Schenkels 54 der Längsnuten 50 der Seitenteile 32, 34 jeweils ein Abstandhalter 106 in der Mitte vorgesehen, der nach Art eines Schneiden- oder Walzenlagers in der Mitte der Längsnut das Spiel zwischen den Federschienen 26, 28 und den Seitenteilen 32, 34 begrenzt, sodass sich eine spielarme Kraftübertragung zwischen dem nicht dargestellten Wischarm und dem Wischblatt 10 ergibt.

## Patentansprüche

1. Anschlusselement (30) für ein Wischblatt (10) zum gelenkigen Verbinden mit einem Wischarm, wobei das Anschlusselement (30) ein in Längsrichtung (74) geteiltes Grundelement aufweist, das aus zwei Seitenteilen (32, 34) zusammengesetzt ist, die jeweils eine zum anderen Seitenteil (32, 34) hin offene Längsnut (50) und an einem oberen Schenkel (52) der Längsnut (50) quer zur Längsrichtung (74) gerichtete Vorsprünge (56) aufweisen, die in Aussparungen (58) des anderen Seitenteils (32, 34) eingreifen, **dadurch gekennzeichnet, dass** eine Blechkralle (36) mit ihrem Boden (42) die Seitenteile (32, 34) überdeckt und außen quer zur Längsrichtung (74) durch Seitenführungen (46) führt, die von den Längsseiten des Bodens (42) zu einem unteren Schenkel (54) des jeweiligen Seitenteils (32, 34) abgewinkelt sind, wobei in Längsrichtung (74) an den Seitenführungen (46) angeformte Laschen (48) seitliche Nocken (68), die an den Außenseiten der Seitenteile (32, 34) angeordnet sind, an der dem Boden (42) abgewandten Seite zumindest teilweise untergreifen.

2. Anschlusselement (30) nach Anspruch 1, **dadurch gekennzeichnet, dass** die Seitenführungen (46) in Längsrichtung (74) an den Nocken (68) anliegen.

3. Anschlusselement (30) nach Anspruch 1, **dadurch gekennzeichnet, dass** die Seitenteile (32, 34) an ihrer Oberseite Zentriernocken (84) aufweisen, die in Aussparungen (86) der Blechkralle (36) passen.

4. Anschlusselement (30) nach einem der vorhergehenden Ansprüche, **dadurch gekennzeichnet, dass** an den Übergängen zwischen den Seitenführungen (46) und den Laschen (48) Biegehilfen (88) vorgesehen sind.

5. Anschlusselement (30) nach einem der vorhergehenden Ansprüche, **dadurch gekennzeichnet, dass** die Laschen (48) und die Seitenführungen (46) bündig mit der Außenkontur der Nocken (68) abschließen.

6. Anschlusselement (30) nach einem der vorhergehenden Ansprüche, **dadurch gekennzeichnet, dass** in den Längsnuten (50) der Seitenteile (32, 34) Nocken (76) angeformt sind, um die Seitenteile (32, 34) in Längsrichtung (74) durch passende Aussparungen (78) am Wischblatt (10) zu sichern.

7. Anschlusselement (30) nach einem der vorhergehenden Ansprüche, **dadurch gekennzeichnet, dass** an jedem Seitenteil (32, 34) in einem Endbereich ein Vorsprung (56) und im anderen Endbereich eine Aussparung (58) vorgesehen sind, die zu einer Aussparung (58) bzw. einem Vorsprung (56) des anderen Seitenteils (32, 34) passen, und dass in Längsrichtung (74) zu beiden Seiten eines Vorsprungs (56) bzw. einer Aussparung (58) Anlageflächen (60, 62) angeordnet sind.

8. Anschlusselement (30) nach Anspruch 7, **dadurch gekennzeichnet, dass** die Anlageflächen (60, 62) geneigt zur Hochachse (80) verlaufen, wobei sie in Längsrichtung (74) abwechselnd den Längsnuten (50) der Seitenteile (32, 34) zugewandt oder abgewandt sind.

9. Anschlusselement (30) nach einem der Ansprüche 1 bis 6, **dadurch gekennzeichnet, dass** an jedem Seitenteil (32, 34) in einem Endbereich ein Vorsprung (90) und im anderen Endbereich eine Aussparung (94) vorgesehen sind, die zu einer Aussparung (94) bzw. einem Vorsprung (90) des anderen Seitenteils (32, 34) passen, und dass in Längsrichtung (74) auf einer Seite eines Vorsprungs (90) bzw. einer Aussparung (94) Anlageflächen (60, 62) angeordnet sind, die in Form einer konvexen bzw. konkaven Dachfläche zueinander angeordnet sind und geneigt zur Hochachse (80) verlaufen.

10. Anschlusselement (30) nach Anspruch 9, **dadurch gekennzeichnet, dass** auf der den Anlageflächen (92) gegenüberliegenden Seite der Aussparung (94) ein Rasthaken (96) angeordnet ist, der mit einer Rastvertiefung (98) an einem Vorsprung (90) zusammenwirkt.

11. Anschlusselement (30) nach einem der Ansprüche 7 bis 10, **dadurch gekennzeichnet, dass** der Vorsprung (56, 90) des einen Seitenteils (32, 34) mit seinen Anlageflächen (60 bzw. 62, 92) und die zugeordnete Aussparung (58, 94) des anderen Seitenteils (32, 34) mit ihren entsprechenden Anlageflächen (60 bzw. 62, 92) mindestens einen Führungsblock (64, 100) bilden, der gegenüber den oberen Schenkeln (52) nach oben vorsteht und in eine entsprechende Aussparung (44) der Blechkralle (36) eingreift.

12. Anschlusselement (30) nach Anspruch 11, **dadurch gekennzeichnet, dass** die Nocken (68) über die oberen Schenkel (52) ein Stück hervorragen und mit den Führungsblöcken (64, 100) Zwischenräume (66) bilden, in denen Teile der Umrandungen der Aussparungen (44) eingebettet sind.

13. Anschlusselement (30) nach einem der vorhergehenden Ansprüche, **dadurch gekennzeichnet, dass** die Vorsprünge (56) an ihren Enden einen mittleren Längskanal (82) bilden, der auf der vom Boden (42) der Blechkralle (36) abgewandten Seite liegt.

14. Anschlusselement (30) nach einem der vorhergehenden Ansprüche, **dadurch gekennzeichnet, dass** in der Mitte des oberen Schenkels (52) der Längsnut (50) eine zum anderen Seitenteil (32, 34) weisende Lasche (102) angeformt ist, die im montierten Zustand mit einem schneidenförmigen Nocken (104) an ihrer Unterseite gegen die Rückenleiste (16) der Wischleiste (12) drückt.

15. Anschlusselement (30) nach einem der vorhergehenden Ansprüche, **dadurch gekennzeichnet, dass** in der Mitte des unteren Schenkels (54) der Längsnut (50) an der Innenseite ein Abstandhalter (106) quer zur Längsrichtung (74) angeformt ist.

16. Anschlusselement (30) nach einem der vorhergehenden Ansprüche, **dadurch gekennzeichnet, dass** die Seitenteile (32, 34) für ein Wischblatt (10) identisch sind.

17. Wischblatt mit einem Anschlusselement (30) zum gelenkigen Verbinden mit einem Wischarm, wobei das Anschlusselement (30) ein geteiltes Grundelement aufweist, das aus zwei Seitenteilen (32, 34) zusammengesetzt ist, die jeweils eine zum anderen Seitenteil (32, 34) hin offene Längsnut (50) und an einem Schenkel (52) der Längsnut (50) quer zur Längsrichtung (74) gerichtete Vorsprünge (56) aufweisen, die in Aussparungen (58) des anderen Seitenteils (32, 34) eingreifen, insbesondere nach einem der vorhergehenden Ansprüche, **dadurch gekennzeichnet, dass** eine Blechkralle (36) mit ihrem Boden (42) die Seitenteile (32, 34) zumindest abschnittsweise überdeckt und außen quer zur Längsrichtung (74) durch Seitenführungen (46) führt, wobei in Längsrichtung (74) an den Seitenführungen (46) angeformte Laschen (48) die Außenseiten der Seitenteile (32, 34) an der dem Boden (42) abgewandten Seite zumindest teilweise untergreifen.

## Claims

1. Connection element (30) for a wiper blade (10) for the articulated connection to a wiper arm, wherein the connection element (30) has a base element which is divided in the longitudinal direction (74) and is composed of two side parts (32, 34), each of which has a longitudinal groove (50) open towards the other side part (32, 34) and projections (56) which are directed transversely with respect to the longitudinal direction (74) on an upper limb (52) of the longitudinal groove (50) and engage in cutouts (58) in the other side part (32, 34), **characterized in that** a sheet-metal claw (36) covers the side parts (32, 34) with its base (42) and guides said side parts on the outside transversely with respect to the longitudinal direction (74) by means of side guides (46) which are bent away from the longitudinal sides of the base (42) to a lower limb (54) of the particular side part (32, 34), tabs (48) which are integrally formed on the side guides (46) in the longitudinal direction (74) at least partially engaging under lateral bosses (68), which are arranged on the outer sides of the side parts (32, 34), on the side facing away from the base (42).

2. Connection element (30) according to Claim 1,
**characterized in that** the side guides (46) bear in the longitudinal direction (74) against the bosses (68).

3. Connection element (30) according to Claim 1, **characterized in that** the upper sides of the side parts (32, 34) have centring bosses (84) which fit in cutouts (86) in the sheet-metal claw (36).

4. Connection element (30) according to one of the preceding claims, **characterized in that** bending aids (88) are provided at the transitions between the side guides (46) and the tabs (48).

5. Connection element (30) according to one of the preceding claims, **characterized in that** the tabs (48) and the side guides (46) end flush with the outer contour of the bosses (68).

6. Connection element (30) according to one of the preceding claims, **characterized in that** bosses (76) are integrally formed in the longitudinal grooves (50) of the side parts (32, 34) in order to secure the side parts (32, 34) in the longitudinal direction (74) on the wiper blade (10) by means of matching cutouts (78).

7. Connection element (30) according to one of the preceding claims, **characterized in that** a projection (56) is provided in one end region and a cutout (58) in the other end region on each side part (32, 34), said projection and cutout matching a cutout (58) in and a projection (56) of the other side part (32, 34), and **in that** bearing surfaces (60, 62) are arranged in the longitudinal direction (74) on both sides of a projection (56) or a cutout (58).

8. Connection element (30) according to Claim 7, **characterized in that** the bearing surfaces (60, 62) run at an inclination with respect to the vertical axis (80), said bearing surfaces facing or facing away from the longitudinal grooves (50) in the side parts (32, 34) in an alternating manner in the longitudinal direction (74).

9. Connection element (30) according to one of Claims 1 to 6, **characterized in that** a projection (90) is provided in one end region and a cutout (94) is provided in the other end region on each side part (32, 34), said projection and cutout matching a cutout (94) in and a projection (90) of the other side part (32, 34), and **in that** bearing surfaces (60, 62) are arranged in the longitudinal direction (74) on one side of a projection (90) or cutout (94), said bearing surfaces being arranged with respect to each other in the form of a convex or concave roof surface and running at an inclination to the vertical axis (80).

10. Connection element (30) according to Claim 9, **characterized in that** a latching hook (96) is arranged on that side of the cutout (94) which lies opposite the bearing surfaces (92), and interacts with a latching depression (98) on a projection (90).

11. Connection element (30) according to one of Claims 7 to 10, **characterized in that** the projection (56, 90) of the one side part (32, 34) together with the bearing surfaces (60 or 62, 92) thereof, and the associated cutout (58, 94) in the other side part (32, 34) together with the corresponding bearing surfaces (60 or 62, 92) thereof form at least one guide block (64, 100) which protrudes upwards in relation to the upper limbs (52) and engages in a corresponding cutout (44) in the sheet-metal claw (36).

12. Connection element (30) according to Claim 11, **characterized in that** the bosses (68) protrude for a distance beyond the upper limbs (52) and, together with the guide blocks (64, 100), form intermediate spaces (66) in which parts of the borders of the cutouts (44) are embedded.

13. Connection element (30) according to one of the preceding claims, **characterized in that** the ends of the projections (56) form a central longitudinal channel (82) which lies on the side facing away from the base (42) of the sheet-metal claw (36).

14. Connection element (30) according to one of the preceding claims, **characterized in that** a tab (102) is integrally formed in the centre of the upper limb (52) of the longitudinal groove (50), said tab pointing to the other side part (32, 34) and, in the fitted state, pressing with a knife-shaped boss (104) on the lower side thereof against the back strip (16) of the wiper strip (12).

15. Connection element (30) according to one of the preceding claims, **characterized in that** a spacer (106) is integrally formed transversely with respect to the longitudinal direction (74) in the centre of the lower limb (54) of the longitudinal groove (50) on the inner side.

16. Connection element (30) according to one of the preceding claims, **characterized in that** the side parts (32, 34) for a wiper blade (10) are identical.

17. Wiper blade with a connection element (30) for the articulated connection to a wiper arm, wherein the connection element (30) has a divided base element which is composed of two side parts (32, 34), each of which has a longitudinal groove (50) open towards the other side part (32, 34) and projections (56) which are directed transversely with respect to the longitudinal direction (74) on a limb (52) of the longitudinal groove (50) and engage in cutouts (58) in the other side part (32, 34), in particular according to one of the preceding claims, **characterized in that** a sheet-metal claw (36) at least partially covers the side parts (32, 34) with its base (42) and guides said side parts on the outside transversely with respect to the longitudinal direction (74) by means of side guides (46), tabs (48) which are integrally formed on the side guides (46) in the longitudinal direction (74) at least partially engaging under the outer sides of the side parts (32, 34), on the side facing away from the base (42).

## Revendications

1. Elément de raccordement (30) pour un balai d'essuie-glace (10) pour la connexion articulée à un bras d'essuie-glace, l'élément de raccordement (30) présentant un élément de base divisé dans la direction longitudinale (74), qui se compose de deux parties latérales (32, 34), qui présentent chacune une rainure longitudinale (50) ouverte vers l'autre partie latérale (32, 34) et des saillies (56) orientées transversalement à la direction longitudinale (74) sur une branche supérieure (52) de la rainure longitudinale (50), qui s'engagent dans des évidements (58) de l'autre partie latérale (32, 34), **caractérisé en ce qu'**une griffe en tôle (36) recouvre avec son fond (42) les parties latérales (32, 34) et conduit à l'extérieur transversalement à la direction longitudinale (74) à travers des guides latéraux (46), qui sont coudés depuis les côtés latéraux du fond (42) jusqu'à une branche inférieure (54) de la partie latérale respective (32,34), des pattes (48) façonnées sur les guides latéraux (46) dans la direction longitudinale (74) venant en prise par le dessous au moins en partie avec des cames latérales (68), qui sont disposées sur les côtés extérieurs des parties latérales (32, 34), du côté opposé au fond (42).

2. Elément de raccordement (30) selon la revendication 1, **caractérisé en ce que** les guides latéraux (46) s'appliquent contre les cames (68) dans la direction longitudinale (74).

3. Elément de raccordement (30) selon la revendication 1, **caractérisé en ce que** les parties latérales (32, 34) présentent sur leur côté supérieur des cames de centrage (84) qui s'adaptent dans des évidements (86) de la griffe en tôle (36).

4. Elément de raccordement (30) selon l'une quelconque des revendications précédentes, **caractérisé en ce que** des auxiliaires de flexion (88) sont prévus au niveau des transitions entre les guides latéraux (46) et les pattes (48).

5. Elément de raccordement (30) selon l'une quelconque des revendications précédentes, **caractérisé en ce que** les pattes (48) et les guides latéraux (46) se terminent en affleurement avec le contour extérieur des cames (68).

6. Elément de raccordement (30) selon l'une quelconque des revendications précédentes, **caractérisé en ce que** des cames (76) sont façonnées dans les rainures longitudinales (50) des parties latérales (32, 34), afin de fixer les parties latérales (32, 34) dans la direction longitudinale (74) à travers des évidements adaptés (78) sur le balai d'essuie-glace (10).

7. Elément de raccordement (30) selon l'une quelconque des revendications précédentes, **caractérisé en ce que** sur chaque partie latérale (32, 34), sont prévus, dans une région d'extrémité, une saillie (56), et dans l'autre région d'extrémité, un évidement (58), qui s'adaptent à un évidement (58) ou une saillie (56) de l'autre partie latérale (32, 34), et **en ce que**, dans la direction longitudinale (74), des deux côtés d'une saillie (56) ou d'un évidement (58), sont disposées des faces d'appui (60, 62).

8. Elément de raccordement (30) selon la revendication 7, **caractérisé en ce que** les faces d'appui (60, 62) s'étendent de manière inclinée par rapport à l'axe vertical (80), et elles sont tournées vers ou à l'opposé des rainures longitudinales (50) des parties latérales (32, 34), en alternance dans la direction longitudinale (74).

9. Elément de raccordement (30) selon l'une quelconque des revendications 1 à 6, **caractérisé en ce que**, sur chaque partie latérale (32, 34), sont prévus, dans une région d'extrémité, une saillie (90), et dans l'autre région d'extrémité, un évidement (94), qui s'adaptent à un évidement (94) ou une saillie (90) de l'autre partie latérale (32, 34), et **en ce que**, dans la direction longitudinale (74), d'un côté d'une saillie (90) ou d'un évidement (94), sont disposées des faces d'appui (60, 62), qui sont disposées l'une par rapport à l'autre en forme de surface de toit convexe ou concave, et qui s'étendent de manière inclinée par rapport à l'axe vertical (80).

10. Elément de raccordement (30) selon la revendication 9, **caractérisé en ce que** du côté de l'évidement (94) opposé aux faces d'appui (92), est disposé un crochet d'encliquetage (96), qui coopère avec un renfoncement d'encliquetage (98) sur une saillie (90).

11. Elément de raccordement (30) selon l'une quelconque des revendications 7 à 10, **caractérisé en ce que** la saillie (56, 90) d'une partie latérale (32, 34) avec ses faces d'appui (60, respectivement 62, 92) et l'évidement associé (58, 94) de l'autre partie latérale (32, 34) avec ses faces d'appui correspondantes (60, respectivement 62, 92), forment au moins un bloc de guidage (64, 100), qui dépasse vers le haut par rapport aux branches supérieures (52) et qui vient en prise dans un évidement correspondant (44) de la griffe en tôle (36).

12. Elément de raccordement (30) selon l'une quelconque des revendications 11, **caractérisé en ce que** les cames (68) dépassent un peu des branches supérieures (52) et forment avec les blocs de guidage (64, 100) des espaces intermédiaires (66), dans lesquels sont noyées des parties des pourtours des évidements (44).

13. Elément de raccordement (30) selon l'une quelconque des revendications précédentes, **caractérisé en ce que** les saillies (56) forment à leurs extrémités un canal longitudinal central (82), qui est situé du côté opposé au fond (42) de la griffe en tôle (36).

14. Elément de raccordement (30) selon l'une quelconque des revendications précédentes, **caractérisé en ce qu'**une patte (102) tournée vers l'autre partie latérale (32, 34) est façonnée au milieu de la branche supérieure (52) de la rainure longitudinale (50), et presse dans l'état monté avec une came (104) en forme d'arête au niveau de son côté inférieur contre la raclette arrière (16) de la raclette de balai d'essuie-glace (12).

15. Elément de raccordement (30) selon l'une quelconque des revendications précédentes, **caractérisé en ce qu'**au milieu de la branche inférieure (54) de la rainure longitudinale (50), au niveau du côté intérieur, est façonné un élément d'espacement (106) transversalement à la direction longitudinale (74).

16. Elément de raccordement (30) selon l'une quelconque des revendications précédentes, **caractérisé en ce que** les parties latérales (32, 34) sont identiques pour un même balai d'essuie-glace (10).

17. Balai d'essuie-glace comprenant un élément de raccordement (30) pour la connexion articulée à un bras d'essuie-glace, l'élément de raccordement (30) présentant un élément de base divisé, qui se compose de deux parties latérales (32, 34), qui présentent chacune une rainure longitudinale (50) ouverte vers l'autre partie latérale (32, 34), et sur une branche (52) de la rainure longitudinale (50), des saillies (56) orientées transversalement à la direction longitudinale (74), qui viennent en prise dans des évidements (58) de l'autre partie latérale (32, 34), notamment selon l'une quelconque des revendications précédentes, **caractérisé en ce qu'**une griffe en tôle (36) recouvre au moins en partie avec son fond (42) les parties latérales (32, 34) et conduit à l'extérieur transversalement à la direction longitudinale (74) à travers des guides latéraux (46), des pattes (48) façonnées sur les guides latéraux (46) dans la direction longitudinale (74) venant en prise par le dessous au moins en partie avec les côtés extérieurs des parties latérales (32, 34), du côté opposé au fond (42).
